## Europäisches Patentamt

## European Patent Office

## Office européen des brevets

(19)

(11) Veröffentlichungsnummer: **0 085 876**
**B1**

(12) # EUROPÄISCHE PATENTSCHRIFT

(45) Veröffentlichungstag der Patentschrift:
29.05.85

(51) Int. Cl.⁴: **B 29 B 7/22**

(21) Anmeldenummer: 83100572.3

(22) Anmeldetag: **22.01.83**

(54) Vorrichtung zum Erzeugen eines chemisch reaktionsfähigen Gemisches.

(30) Priorität: **05.02.82 DE 3203906**

(43) Veröffentlichungstag der Anmeldung:
**17.08.83 Patentblatt 83/33**

(45) Bekanntmachung des Hinweises auf die Patenterteilung:
**29.05.85 Patentblatt 85/22**

(84) Benannte Vertragsstaaten:
**DE FR GB IT**

(56) Entgegenhaltungen:
**EP - A - 0 024 608**
**DE - A - 3 018 380**
**DE - B - 1 282 522**
**DE - B - 2 631 588**
**DE - B - 2 801 942**

(73) Patentinhaber: **Elastogran Maschinenbau GmbH,
D-8021 Strasslach (DE)**

(72) Erfinder: **Taubenmann, Peter, Strindbergstrasse 1,
D-8000 Muenchen 60 (DE)**

(74) Vertreter: **Springer, Hans Jörg, Dr. et al,
Carl-Bosch-Strasse 38, D-6700 Ludwigshafen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft eine Vorrichtung zum Erzeugen eines vorzugsweise chemisch reaktionsfähigen Gemisches aus mindestens zwei Kunststoffkomponenten mit einer Mischkammer, die Eintrittsöffnungen mit verstellbaren Einspritzquerschritten für die einzelnen Kunststoffkomponenten und eine Austrittsöffnung für das Kunststoffkomponenten-Gemisch besitzt, sowie mit einem in der Mischkammer angeordneten querschnittsgleichen Ausstoßkolben, der aus einer die Eintrittsöffnungen offenlassenden hinteren Stellung bis in den Bereich der Austrittsöffnung, dabei die Eintrittsöffnungen gegenüber der Mischkammer gleichzeitig absperrend, hin- und herbewegbar ist.

Bei einer bekannten Vorrichtung dieser Art (DE-C-1 282 522) öffnen und schließen wechselweise und gleichzeitig die Eintrittsöffnungen für die einzelnen Kunststoffkomponenten, ohne daß besondere Steuerungsmittel für das Öffnen und Schließen vorgesehen werden müssen, da bei der hin- und hergehenden Bewegung des Ausstoßkolbens die Eintrittsöffnungen jeweils überfahren werden. Mit dem Gemischausstoß ist ferner verbunden die Reinigung der Mischkammerwandung von Gemischresten, die durch den mit der Mischkammer querschnittsgleichen Ausstoßkolben beim Ausfahren entfernt werden. Um zu verhindern, daß an der Innenwandung der Mischkammer auch nur geringe Reste des Kunststoffkomponentengemisches haften bleiben, ist die Mischkammer in einer elastischen Buchse ausgebildet, deren lichte Weite durch eine in Achsrichtung wirkende Vorspannkraft veränderbar ist. Der Beginn des Einspritzvorganges beziehungsweise der sogenannten Schußzeit wird mit dem Beginn der Bewegung des Ausstoßkolbens festgelegt, was aber in manchen Fällen zu Ungenauigkeiten bei der Dosierung der Menge der Kunststoffkomponenten führt.

Es ist weiterhin bekannt, die Dosierung der Komponenten in die Mischkammer mittels Lochdüsen, die eine hohe Energieausbeute für die Vermischung ermöglichen, oder nach der EP-A1-0 024 608 mit Hilfe von Ringspaltdüsen vorzunehmen, bei denen eine axial verstellbare, konzentrisch im Düsengehäuse angeordnete Nadel mit der konzentrischen Düsenöffnung des Düsengehäuses einen veränderlichen, durch verstellbare Anschläge fixierbaren Spalt freigibt. Aus der Düsenöffnung bzw. dem Ringspalt treten die zu vermischenden Komponenten in eine Injektionskammer ein, in der sie vermischt werden. Neben dem Abstand und der Lage solcher Düsen zueinander bestimmen vor allem die Form und der Querschnitt der Düsen bzw. der Durchströmquerschnitt das Mischergebnis entscheidend. Die Düsenöffnungen bzw. deren freier Querschnitt werden in bekannter Weise von Hand nach weitgehend subjektiver Beurteilung des Mischergebnisses auf die Strömungsgeschwindigkeit und Viskosität der Kunststoffkomponenten abgestimmt. Dabei ist jedoch die Möglichkeit der Einflußnahme auf die Strömungsverhältnisse in den Eintrittsöffnungen begrenzt.

Der Erfindung liegt daher die Aufgabe zugrunde, eine Vorrichtung der eingangs genannten Art zu schaffen, die unter Berücksichtigung der tatsächlichen Betriebsverhältnisse eine Änderung der Strömungsgeschwindigkeit der Kunststoffkomponenten je Zeiteinheit und damit des Druckes vor der Düse erlaubt.

Diese Aufgabe wird nach der Erfindung gelöst durch je einen elastischen Ring in den Eintrittsöffnungen jeder Kunststoffkomponente, dessen freier Durchlaß durch eine in Strömungsrichtung wirkende Vorspannkraft veränderbar ist.

Dadurch, daß der Ring elastisch verformbar ist, kann weitgehend verlustfrei Druckenergie in Bewegungsenergie umgesetzt werden, d. h. es werden die Vorteile, die sich aufgrund der Verstellbarkeit einer Nadeldüse ergeben, und die hohe Energieausbeute bei einer Lochdüse in gleichem Maße erreicht. Durch die Elastizität des vorzugsweise aus einem Polyurethan-Elastomer bestehenden Ringes sind entsprechend der Vorspannkraft verschieden gestaltete Durchströmquerschnitte in den Eintrittsöffnungen einstellbar. Hierbei kann der elastische Ring auch aus Abschnitten unterschiedlicher Dichte aufgebaut sein. Es ist somit in einfacher Weise möglich, wechselnde Erfordernisse bei der Herstellung von Mehrkomponenten-Kunststoffen zu berücksichtigen. Dies kann durch entsprechende Markierungen an den die Vorspannkraft übertragenden Einrichtungen erleichtert werden.

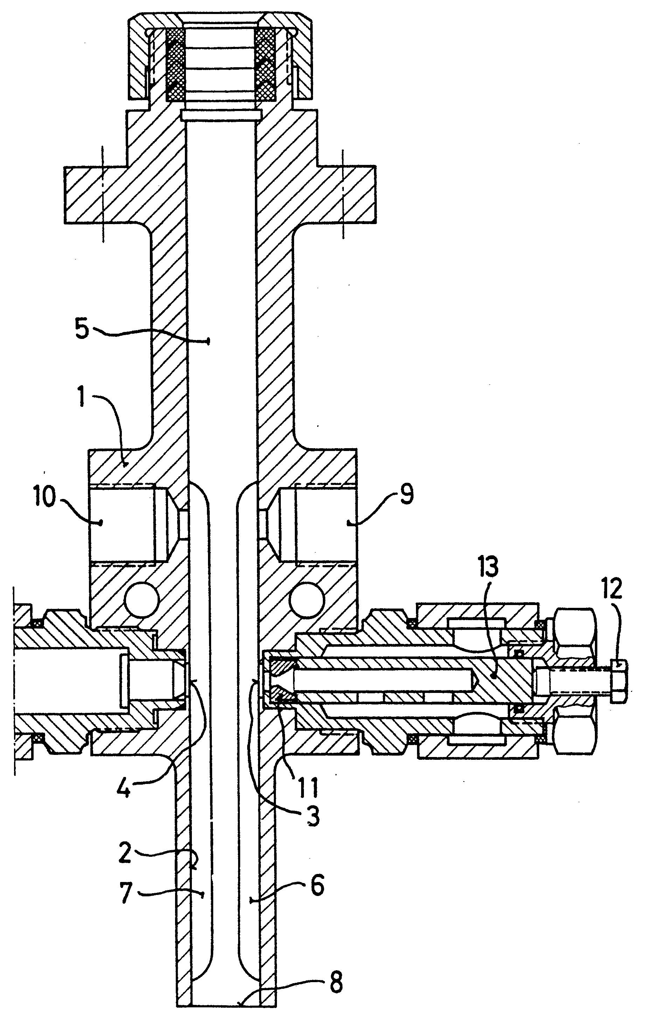

Die Erfindung wird im folgenden unter Hinweis auf die Zeichnung anhand eines Ausführungsbeispieles näher erläutert.

Die Vorrichtung zum Mischen von zwei Kunststoffkomponenten besteht im wesentlichen aus einem Gehäuse 1, in dem eine Mischkammer 2 ausgebildet ist. In die im allgemeinen kreiszylindrische Mischkammer führen Eintrittsöffnungen 3 und 4. Mit 5 ist ein Ausstoßkolben bezeichnet, der in der Mischkammer hin- und herbewegbar ist, um den Einlauf der Kunststoffkomponenten zu steuern und gleichzeitig die Mischkammer zu reinigen. Der in der Zeichnung in seiner unteren Endstellung dargestellte Ausstoßkolben mit Rücklaufnuten 6 und 7 wird durch eine hydraulische Kolben-Zylinder-Einheit betätigt und ist bis in den Bereich der Austrittsöffnung 8 der Mischkammer verfahrbar. In dieser sogenannten Rezirkulationsstellung treffen die Kunststoffkomponenten nicht aufeinander, sondern werden über die Rücklaufnuten durch Öffnungen 9 und 10 wieder zu Vorratsbehältern zurückgeführt.

In den Eintrittsöffnungen 3 und 4 ist jeweils ein elastischer Ring 11 eingesetzt, der an seiner äußeren Mantelfläche vollständig eingekammert ist. Sein freier Durchlaß kann zylindrisch oder in Form einer Düse mit sich stetig verengendem und gegebenenfalls wieder erweiterndem Querschnitt ausgebildet sein. Wird dieser elastische Ring von seinen Stirnseiten durch die angrenzenden Einrichtungen, beispielsweise eine Stellschraube 12 mit Markierungen und einen Zylinder 13, zusammengepreßt, so ändert sich in radialer Richtung der Durchmesser des freien Durchlasses. Auf diese Weise lassen sich Geschwindigkeit und Druck der jeweiligen Kunststoffkomponente stufenlos einstellen.

## Patentansprüche

1. Vorrichtung zum Erzeugen eines vorzugsweise chemisch reaktionsfähigen Gemisches aus mindestens zwei Kunststoffkomponenten mit einer Mischkammer (2), die Eintrittsöffnungen (3) und (4) mit verstellbaren Einspritzquerschnitten für die einzelnen Kunststoffkomponenten und eine Austrittsöffnung (8) für das Kunststoffkomponenten-Gemisch besitzt, sowie mit einem in der Mischkammer (2) angeordneten querschnittsgleichen Ausstoßkolben (5), der aus einer die Eintrittsöffnungen offenlassenden hinteren Stellung bis in den Bereich der Austrittsöffnung, dabei die Eintrittsöffnungen gegenüber der Mischkammer gleichzeitig absperrend, hin- und herbewegbar ist, gekennzeichnet durch je einen elastischen Ring (11) in den Eintrittsöffnungen (3) und (4) jeder Kunststoffkomponente, dessen freier Durchlaß durch eine in Strömungsrichtung wirkende Vorspannkraft veränderbar ist.

2. Vorrichtung nach Anspruch 1, dadurch gekennzeichnet, daß der elastische Ring (11) aus einem Polyurethan-Elastomer besteht.

3. Vorrichtung nach den Ansprüchen 1 und 2, dadurch gekennzeichnet, daß zur Fixierung des freien Durchlasses des elastischen Rings (11) an den die Vorspannkraft übertragenden Einrichtungen (12, 13), eine Markierung vorgesehen ist.

## Claims

1. Apparatus for producing a preferably chemically reactive mixture of at least two plastics components, comprising a mixing chamber (2) which possesses inlet orifices (3) and (4), having adjustable flow cross-sections, for the individual plastics components and an outlet orifice (8) for the mixture of plastics components, as well as an expulsion plunger (5) located in the mixing chamber (2) and having a cross-section matching that of the chamber, which plunger can move to and fro between a rear position in which the inlet orifices are left open and a position in the region of the outlet orifice, in which position the inlet orifices are simultaneously shut off from the mixing chamber, wherein a resilient ring (11) is inserted in each of the inlet orifices (3) and (4) for each plastics component, the free cross-section of which ring can be varied by applying a load acting in the direction of flow.

2. Apparatus as claimed in claim 1, wherein the resilient ring (11) consists of a polyurethane elastomer.

3. Apparatus as claimed in claims 1 and 2, wherein, for setting the free cross-section of the resilient ring (11), a mark is provided on the devices (12, 13) which transmit the load.

## Revendications

1. Appareil pour la production d'un mélange, de préférence réactif chimiquement, à au moins deux composants de matière plastique, qui comporte une chambre de mélange (2), à orifices d'entrée (3) et (4) à sections d'injection réglables pour les différents composants de matière plastique et un orifice de sortie (8) pour le mélange des composants de matière plastique, ainsi qu'un piston de chasse (5) disposé dans la chambre de mélange (2) et d'égale section, qui peut se déplacer, d'un mouvement de va-et-vient, depuis une position arrière dégageant les orifices d'entrée jusqu'au voisinage de l'orifice de sortie, y obturant simultanément les orifices d'entrée vis-à-vis de la chambre de mélange, caractérisé par une bague élastique (11) dans les orifices d'entrée (3) et (4) de chacun des composants de matière plastique, bague dont le passage libre est réglable par une force de précontrainte agissant dans la direction de l'écoulement.

2. Appareil selon la revendication 1, caractérisé par le fait que la bague élastique (11) est en élastomère de polyuréthane.

3. Appareil selon les revendications 1 et 2, caractérisé par le fait qu'un repère est prévu pour la fixation du passage libre de la bague élastique (11) au dispositif (12, 13) transmettant la force de précontrainte.